# EUROPÄISCHE PATENTSCHRIFT

(11) **EP 3 737 230 B1**
(45) Veröffentlichungstag und Bekanntmachung des Hinweises auf die Patenterteilung: **24.06.2026**
(21) Anmeldenummer: 19700773.5
(22) Anmeldetag: 09.01.2019
(51) Int. Cl.: A01N 3/00, A01N 25/04, A01N 61/00, A01P 17/00

(54) **FORMULIERUNG FÜR EIN MITTEL ZUR TIERABWEHR**
FORMULATION FOR AN ANIMAL REPELLENT PREPARATION
FORMULATION POUR UNE PREPARATION RÉPULSIVE POUR LES ANIMAUX

(30) Priorität: 09.01.2018 AT 500042018; 07.02.2018 AT 501142018
(43) Veröffentlichungstag der Anmeldung: 18.11.2020
(73) Patentinhaber: Zsifkovits, Wilhelm, 2100 Korneuburg (AT)
(72) Erfinder: Zsifkovits, Wilhelm, 2100 Korneuburg (AT)
(74) Vertreter: Puchberger & Partner Patentanwälte
(86) Internationale Anmeldenummer: PCT/EP2019/050397
(87) Internationale Veröffentlichungsnummer: WO 2019/137936

(56) Entgegenhaltungen:
- WO-A1-2010/143066
- WO-A1-2014/004018
- WO-A1-2017/172590
- DE-A1- 1 792 467
- DE-A1- 102013 014 940
- DE-A1- 19 848 868
- DE-A1- 2 440 938
- US-A1- 2017 112 138
- GIS WOJCIECH ET AL: "Properties of the rapeseed oil methyl esters and comparing them with the Diesel oil properties", JOURNAL OF KONES POWERTRAIN AND TRANSPORT, 1 January 2011 (2011-01-01), Warsaw, Poland, pages 121 - 127, XP055835040, Retrieved from the Internet <URL:https://kones.eu/ep/2011/vol18/no4/14.pdf> [retrieved on 20210825]
- VANDENBURG L. E. ET AL: "The structural constituents of carnauba wax", JOURNAL OF THE AMERICAN OIL CHEMISTS SOCIETY, vol. 47, no. 12, 1 December 1970 (1970-12-01), DE, pages 514 - 518, XP093023708, ISSN: 0003-021X, Retrieved from the Internet <URL:https://aocs.onlinelibrary.wiley.com/doi/epdf/10.1007/BF02639240> DOI: 10.1007/BF02639240
- KANYA ET AL: "Characterization of wax esters, free fatty alcohols and free fatty acids of crude wax from sunflower seed oil refineries", FOOD CHEMISTRY, ELSEVIER LTD, NL, vol. 101, no. 4, 1 January 2007 (2007-01-01), pages 1552 - 1557, XP005710467, ISSN: 0308-8146, DOI: 10.1016/J.FOODCHEM.2006.04.008
- TERRI A. STORTZ ET AL: "The replacement for petrolatum: thixotropic ethylcellulose oleogels in triglyceride oils", GREEN CHEMISTRY, vol. 16, no. 6, 1 January 2014 (2014-01-01), GB, pages 3064 - 3070, XP055553763, ISSN: 1463-9262, DOI: 10.1039/C4GC00052H
- DAN-XIA YANG ET AL: "Phytosterol-based oleogels self-assembled with monoglyceride for controlled volatile release", JOURNAL OF THE SCIENCE OF FOOD AND AGRICULTURE, vol. 98, no. 2, 26 June 2017 (2017-06-26), GB, pages 582 - 589, XP055553812, ISSN: 0022-5142, DOI: 10.1002/jsfa.8500
- HONG-SIK HWANG ET AL: "Organogel Formation of Soybean Oil with Waxes", JOURNAL OF THE AMERICAN OIL CHEMISTS' SOCIETY, SPRINGER-VERLAG, BERLIN/HEIDELBERG, vol. 89, no. 4, 27 October 2011 (2011-10-27), pages 639 - 647, XP035034237, ISSN: 1558-9331, DOI: 10.1007/S11746-011-1953-2
- NELSON K.O. OJIJO ET AL: "Changes in microstructural, thermal, and rheological properties of olive oil/monoglyceride networks during storage", FOOD RESEARCH INTERNATIONAL, vol. 37, no. 4, 1 May 2004 (2004-05-01), AMSTERDAM, NL, pages 385 - 393, XP055553819, ISSN: 0963-9969, DOI: 10.1016/j.foodres.2004.02.003
- ARTUR J. MARTINS ET AL: "Beeswax organogels: Influence of gelator concentration and oil type in the gelation process", FOOD RESEARCH INTERNATIONAL, vol. 84, 1 June 2016 (2016-06-01), AMSTERDAM, NL, pages 170 - 179, XP055553860, ISSN: 0963-9969, DOI: 10.1016/j.foodres.2016.03.035
- LOPEZ-MARTÍNEZ A ET AL: "Monoglyceride organogels developed in vegetable oil with and without ethylcellulose", FOOD RESEARCH INTERNATIONAL, ELSEVIER, AMSTERDAM, NL, vol. 72, 18 March 2015 (2015-03-18), pages 37 - 46, XP029240309, ISSN: 0963-9969, DOI: 10.1016/J.FOODRES.2015.03.019

## Beschreibung

Der Forst- und Landwirtschaft entstehen erhebliche Verluste durch Wildschäden (siehe Wildschadensbericht 2014 des österreichischen Bundesministeriums für Land- und Forstwirtschaft, Umwelt und Wasserwirtschaft). Schätzungen dieser Schäden für Österreich bewegen sich im zweistelligen Millionen-Euro-Bereich. Auch die durch Wild verursachten Schäden im Straßenverkehr sind erheblich. Geschätzt sind 15 % aller Unfälle sind mit und durch Wild.

Weitere Schäden werden beispielsweise auch von Maulwürfen verursacht. Der Maulwurf (*Talpa europaea*) rührt Pflanzen zwar nicht an und ernährt sich ausschließlich von Insekten und deren Larven. Beliebt ist er unter Hobbygärtnern, Gärtnern und Landwirten dennoch nicht. Ein junger, vitaler Maulwurf kann täglich um die 20 Erdhügel produzieren. Dadurch richtet er in Gärten, auf landwirtschaftlichen Flächen, aber auch auf Viehweiden einen beträchtlichen Schaden an.

Hunde und Katzen, die ihr Revier markieren, stellen in manchen Fällen ebenfalls eine Störung dar.

Zur Abwehr von Tieren im Allgemeinen und speziell zur Verhinderung von Wildschäden sind im Stand der Technik verschiedene mechanische, physikalische, biologische und chemische Maßnahmen bekannt. Mit diesen Maßnahmen sollen Tiere, wie beispielsweise Wild, am Betreten des zu schützenden Areals oder, sofern dies nicht möglich ist, von einem Verbiss der zu schützenden Pflanzen abgehalten werden. Zu den Maßnahmen, welche die Tiere vom Betreten des zu schützenden Areals abhalten, zählen Umgrenzungseinrichtungen und Schutzzäune. Die Errichtung solcher Einrichtungen ist teuer und nicht immer erwünscht bzw. möglich, wie beispielsweise in Gebirgsregionen und Erholungsgebieten.

Ferner können Tiere auch durch Lärm abgeschreckt werden. Ein Beispiel für akustische Abschreckung ist in der GB 20 2004 014 866 mit einem Schwarzwildabwehrkoffer beschrieben, der ein Radio über eine Akkustation und ein Funkschaltuhrmodul ein- bzw. ausschaltet. Es sind auch andere Tonsignale (z.B. Ultraschall) aussendende Vorrichtungen bekannt.

Weiters wird versucht, Tiere, wie Wild, durch Geruchszäune vom Betreten oder Durchqueren von landwirtschaftlich oder forstwirtschaftlich genutzten Flächen abzuhalten. Wenn die Abwehr durch einen abschreckenden Geruch erfolgt, spricht man auch von Vergrämung oder Verstänkerung.

Die einen abschreckenden Geruch verbreitenden Mittel können beispielsweise auf Begrenzungspfähle aufgestrichen oder auch auf Schwämme oder Stoffstücke aufgebracht werden, welche dann auf Begrenzungspfählen oder Bäumen und Sträuchern montiert werden.

Es ist auch möglich, derartige Mittel direkt auf die von Wildverbiss gefährdeten Pflanzen und/oder Pflanzenteile oder auch auf dem Boden aufzubringen oder in diesen einzuarbeiten.

Ein Beispiel für großflächige Verstänkerung wird in der DE 10 2004 058 934 in Form eines Boden-Verbesserers mit wildabweisender Wirkung beschrieben, wobei natürliche Wildabweisungsmittel wie Tierepithelien, Federn, Fischbestandteile, Säugetierhaare, menschliche Haare, Hunde-, Wolfs- oder Bärenhaare, tierische Ausscheidungsprodukte eingesetzt werden.

Ein weiteres Mittel zur Vergrämung wird in der Patentanmeldung DE 2 264 312 A1 beschrieben. In diesem Dokument wird zudem auf die Problematik bei der Anwendung derartiger unangenehmer Geruchsstoffe verwiesen. Diese Patentanmeldung beschäftigt sich damit, ein spezielles Behältnis so zu konstruieren, dass Hersteller und Anwender vor der Anwendung keinen unmittelbaren Kontakt zu den wirksamen Geruchsstoffen bekommen und die Öffnungen so gestaltet sind, dass der Geruch des Vergrämungsmittels zu einem späteren Zeitpunkt an die Atmosphäre abgegeben wird.

Die DE 102014010830 A1 beschreibt eine weitere Vorrichtung zum Schutz von Jungpflanzen, wobei es sich um ein Behältnis handelt, das in der Nähe von Jungpflanzen positioniert wird, um einen unangenehmen Geruch freizusetzen.

Des Weiteren werden gemäß dem Stand der Technik Maßnahmen gesetzt, welche Tiere, beispielsweise Wild, direkt vom Verbiss der Pflanze abhalten.

Zu den mechanischen Maßnahmen zählen Einzäunungen, Umhüllungen und Umwicklungen gefährdeter Pflanzenteile, beispielsweise Verbiss-Kappen und Verbiss-Manschetten.

Ferner ist die Verwendung von vor Verbiss schützenden Belägen, die eine abweisende Wirkung auf das Wild ausüben, seit vielen Jahren bekannt. Die abweisende Wirkung beruht typischerweise auf dem Geschmack und/oder der Textur (dem Mundgefühl) und/oder der Farbe eines Schutzbelages, der direkt auf die Pflanze oder Pflanzenteile aufgebracht wird.

Ein Beispiel eines solchen Mittels wird in der EP-A 1 81 543 beschrieben. Darin wird die Verwendung wässriger Polymer-Dispersionen einer mittleren Filmbildungstemperatur von 0°C bis 35°C als Wildverbissmittel beschrieben. Diese Dispersionen werden durch Versprühen auf junge Forstkulturen aufgebracht und bilden nach dem Trocknen einen geruchlosen Belag.

In der Patentanmeldung DE102009017323 A1 werden zur Vergrämung von Wild sowie zum Schutz von Forstpflanzen vor Verbissschäden geruchsneutrale Monocarbonsäuresalze beschrieben, welche infolge einer Reaktion mit Bestandteilen der Umgebungsluft zur Freisetzung der eine wildvergrämende Wirkung ausübenden Monocarbonsäure geeignet sind. Das Salz wird vorzugsweise in der Form einer wässrigen Lösung bereitgestellt und an dem jeweiligen Ort auf ein poröses Substrat gleichförmig aufgetragen, wobei die genannte Reaktion unmittelbar einsetzt und eine wildabwehrende Wirkung ausübt.

In der DE 000000733102 A werden Formulierungen von Fetten und Ölen zur Wildabwehr, darunter auch Vaseline, welche phytotoxische Eigenschaften haben und einer Lösung zur Verhinderung dieser phytotoxischen Eigenschaften beschrieben.

Die Dokumente Terri A. Stortz et al. "The replacement for petrolatum: thixotropic ehtylcellulose oleogels in triglyceride oils", Green Chemistry, 16, 6, 2014, 3064-3070; Dan-Xia Yang et al. "Phytosterol-based oleogels self-assembled with monoglyceride for controlled volatile release", Journal of the Science of Food and Agriculture, 98, 2, 2017, 582-589; Hong-Sik Hwang et al. "Organogel Formation of Soybean Oil with Waxes", Journal of the American Oil Chemists' Society, 89, 4, 2011, 639-647; Nelson K.O. Ojijo et al. "Changes in microstructural, thermal, and rheological properties of olive oil/monoglyceride networks during storage", Food Research International, 37, 4, 2004, 385-393; Artur J. Martins et al. "Beeswax organogels: Influence of gelator concentration and oil type in the gelation process", Food Research International; 84, 2016, 170-179; Lopez-Martinez A et al. "Monoglyceride organogels developed in vegetable oil with and without ethylcellulose", Food Research International, 72, 2015, 37-46; WO 2010/143066 A1; WO 2014/004018 A1 und WO 2017/172590 A1 zeigen verschiedene Oleogele.

Die DE 1 792 467 A1, DE 24 40 938 A1, DE 10 2013 014 940 A1, US 2017/112138 A1 und DE 198 48 868 A1 zeigen Wildabwehrmittel.

Viele der vorstehend genannten Maßnahmen sind arbeitsaufwändig und/oder materialintensiv, teuer und bringen nicht immer den gewünschten Erfolg.

Spritz- oder Streichmittel, welche direkt auf die Pflanze oder Pflanzenteile aufgebracht werden, sind mengenmäßig die wichtigste Gruppe von Mitteln zum Verhüten von Wildschäden. Die üblichste Applikation ist das Einstreichen oder Spritzen von Terminaltrieb und Terminalknospe einer Pflanze. Das Spritzen erfolgt mittels handelsüblicher Rücken- oder Gartenspritzen. Die Mittel dafür können unverdünnt oder verdünnt angewendet werden. Da die Viskosität der Mittel, um das Absetzen von Wirk- und Hilfsstoffen zu verhindern, oft hoch ist, werden in der Praxis auch an sich unverdünnt anwendbaren Produkte mit 20 bis 100% Wasser verdünnt. Typische Aufwandmengen im Forst: Gegen Verbiss 3 l bis 5 l/1000 Pflanzen bzw. 10-25 l/ha. Gegen Fegen bis zu 10 l/1000 Pflanzen bzw. 30 l/ha. Gegen Schälen bis zu 100 l/1000 Bäume.

Die Anwendung von Streichmitteln erfolgt üblicherweise mit Hilfe eines Handschuhs, wobei das Mittel beispielsweise mit der Hand aus einem Kübel aufgenommen wird und dann von unten nach oben auf den Trieb gestrichen wird. Die Mittel können auch mit einer Bürste oder einer Rolle oder einer Zangenbürste aufgebracht werden.

Typische Aufwandmengen im Forst: Gegen Verbiss 2 kg bis 7 kg/1000 Pflanzen, gegen Fegen bis zu 10 kg/1000 Pflanzen bzw. 30 l/ha, gegen Schälen bis zu 100 kg/1000 Bäume.

Sehr häufig wird bei der Formulierung dieser Spritz- und Streichmittel als Basis eine Polymerdispersion verwendet, in die verschiedene wildabschreckende oder vertreibende Stoffe eingearbeitet werden. Hauptsächlich kommen dafür Dispersionen von Polyvinylacetat, seinen Copolymeren, Polyacrylate und deren Copolymere zum Einsatz. Es können gemäß dem Stand der Technik aber noch weitere filmbildende Polymerdispersionen als Basis für ein Tierabwehrmittel verwendet werden. Formulierungen von wildabwehrenden oder generell tierabwehrenden Stoffen, welche auf Polymerdispersionen basieren, werden mittels Streichen oder Spritzen auf die zu schützende Pflanze bzw. deren Pflanzenteile aufgetragen. Zur Bildung einer Geruchsbarriere können solche Formulierungen, die einen entsprechenden Geruchsstoff enthalten auch auf Hilfsmittel, zum Beispiel auf Schwämme, aufgetragen werden und diese wieder auf Pflanzen oder Pfählen montiert werden. Es sind auch ölige und auf Lösungsmitteln basierende Produkte am Markt erhältlich. Diese können ready-to-use Formulierungen oder wasserverdünnbare Formulierungen sein.

Vielen diesen Produkten haftet aber der Nachteil der zu geringen Wirkungsdauer an. Besonders Formulierungen, welche in einem vergleichsweise dünnen Film, beispielsweise durch Spritzen, appliziert werden, verlieren durch Witterungseinflüsse wie Regen nach einigen Wochen stark an Wirkung. Zu bevorzugen wäre eine nur zweimalige Applikation pro Jahr - eine im Herbst/Winter gegen den Winterverbiss und eine im Frühjahr gegen den Sommerverbiss.

Produkte, welche über das Mundgefühl wirken und in dicken Schichten als Schälschutzmittel aufgebracht werden, können wirken deutlich länger. Hier werden von den Herstellern als Wirkungsdauer mehrere Jahre angegeben. Solche Produkte schließen sich aber für die Anwendung am Terminaltrieb bzw. der Terminalknospe aus, da diese die Pflanzenteile verkleben können und es zu einer Schädigung der Pflanze kommt. Durch den Zuwuchs, ausgehend von der Terminalknopse, ist zudem nach einer Saison der neue Terminaltrieb nicht mehr durch diese Formulierungen geschützt. Hauptsächlich werden in solche Formulierungen Sande, z.B. Quarzsand, eingearbeitet. Aus der genannten Applikation ergibt sich zwangsläufig, dass sich solche Formulierungen für den Schutz der Rinde von Bäumen eignen, aber nicht notwendigerweise für den Schutz von Terminaltrieb und Terminalknospe.

Ein Nachteil für den Anwender ist, dass er das Produkt selbst und zusätzlich Wasser, einerseits zum Verdünnen des Mittels und andererseits zum Reinigen von Spritze, Handschuhen und Bürsten oft in unwegsames Gelände befördern muss. Durch das Hantieren mit dem Mittel, das Umfüllen, Verdünnen, in die Spritze füllen, Reinigen, ergibt sich unter anderem auch die Gefahr des unbeabsichtigten Kontaktes und Verschüttens. Ein Verschütten stellt nicht nur einen finanziellen Verlust, sondern auch eine erhöhte Gefahr für die Umwelt dar.

Speziell beim Spritzen ist ein weiterer Nachteil die ungleichmäßige Dosierung des Produktes, das Abtropfen von den behandelten Pflanzen und somit Verlust des Mittels. Ein Nachteil der Applikation durch Streichen ist die Dosierbarkeit. Nach der Aufgabe des Mittels auf das Streichwerkzeug bzw. die Streichvorrichtung werden typischerweise mehrere Terminaltriebe bestrichen und es kommt in der Folge zu einer Abnahme der aufgebrachten Menge pro Pflanze. Durch unvorsichtiges Agieren kann auf die erste Pflanze auch eine zu große Menge des Mittels aufgebracht werden. Dadurch kann es zum Verkleben der Terminalknospe und in der Folge zu Wachstumsstörungen kommen.

Zusätzlich enthalten herkömmliche Spritz- und Streichmittel auf PVA-Basis bis zu 80% Wasser. Dieses Wasser stellt den Träger in der Formulierung dar, hat aber keine weitere Funktion und verdunstet nach der Applikation. Also müssen bis zu 80% formuliert, verpackt, gelagert, transportiert und schlussendlich appliziert werden, ohne dass diese Menge eine direkte Wirkung entfaltet.

Durch die vorstehend genannten Nachteile müssen von den Produkten 2 bis 5 kg Produkt pro 1000 Pflanzen ausgebracht werden. Durch Abtropfen von den Zielpflanzen oder Überdosierung werden kann die Differenz zwischen auf den Zielpflanzen applizierter Menge und Verbrauchsmenge deutlich auseinander liegen.

Neben den auf wässrigen Polymerdispersionen basierenden Formulierungen zur Wildabwehr sind auch auf Lösungsmittel basierende Formulierungen bekannt, die im Wesentlichen die gleichen Nachteile aufweisen, wie die wässrigen Formulierungen. Zusätzlich verstärken aber die Lösungsmittel aber die phytotoxischen Eigenschaften oder lösen selbst phytotoxische Effekte aus. Besonders stark sind die phytotoxischen Effekte, wenn die Formulierungen gespritzt werden. Solche Formulierungen können deshalb nur gegen den Winterverbiss nach der Wachstumsperiode und dem Verholzen der Triebe eingesetzt werden. Frisch ausgetriebene Blätter und Knospen werden durch die Phytotoxizität der Formulierung stark geschädigt.

Ein weiterer Nachteil für den Anwender der wässrigen oder lösungsmittelbasierenden Formulierungen, sei es beim Streichen oder Spritzen ist die beträchtliche Gefahr der Kontamination des Anwenders. Bei Streichmittel, die mittels Streichhandschuh appliziert werden, muss der Anwender mit der behandschuhten Hand direkt in das Mittel greifen. Beim Spritzen kann es durch Windabdrift zum Einatmen der Formulierung kommen. Zusätzliche Nachteile sind die Notwendigkeit der Verwendung von weiteren Werkzeugen, wie z.B. Streichhandschuh, Bürstenzange, Spritze, sowie die Notwendigkeit des Reinigens der Werkzeuge nach der Applikation.

Es ist eine Aufgabe der Erfindung, die Nachteile des Standes der Technik zu überwinden und ein Mittel zu schaffen, welches eine geeignete Langzeitwirkung aufweist. Es sind weitere Aufgaben der Erfindung, ein Mittel zu schaffen, welches für den Anwender einfach und verlustarm bzw. verlustfrei appliziert werden kann und welches ohne Schädigung des Pflanzenwachstums beispielsweise auf Terminaltriebe oder Terminalknospen aufgebracht werden kann.

Die Aufgabe der Erfindung wird durch die Merkmale des unabhängigen Patentanspruchs gelöst. Weitere Merkmale von bevorzugten Ausführungsformen der Erfindung ergeben sich aus den abhängigen Patentansprüchen.

Die Erfindung betrifft die Verwendung einer Formulierung als Mittel zur Tierabwehr, welche wenigstens eine immobilisierbare Flüssigkeit und einen bei Raumtemperatur festen oder halbfesten Gelbildner umfasst, wobei die Formulierung ein plastisches nicht newtonsches Fluid ist, bei dem die zum Erreichen des Fließzustandes bzw. des Fließens notwendige Mindestschubspannung größer als 0 ist, gemäß der Definition nach Anspruch 1. Die erfindungsgemäß eingesetzte Formulierung ist ein Casson-Fluid.

"Bei Raumtemperatur" bezeichnet in Zusammenhang mit der vorliegenden Erfindung bevorzugt eine Temperatur von 20°C. "Halbfest" kann bedeuten, dass ein Stoff bei einer bestimmten Temperatur nicht vollständig fest, beispielsweise gallertartig, ist.

In Zusammenhang mit der vorliegenden Erfindung kann eine "immobilisierbare Flüssigkeit" jede Flüssigkeit bezeichnen, die durch eine gelartige Struktur immobilisiert werden kann.

Gegebenenfalls kann vorgesehen sein, dass die immobilisierbare Flüssigkeit eine organische, insbesondere eine nicht mit Wasser mischbare, Flüssigkeit ist.

Gegebenenfalls kann vorgesehen sein, dass die immobilisierbare Flüssigkeit ein Öl, insbesondere ein nichttrocknendes Öl, ist.

Erfindungsgemäß ist vorgesehen, dass der Gelbildner ein niedermolekularer Gelbildner mit einem Molekulargewicht von unter 4000 g/Mol ist, wobei der Gelbildner vorzugsweise ausgewählt ist aus 12-Hydroxystearinsäure (HSA), (1,3:2,4)-Dibenzylidensorbitol (DBS), Sterolen, Lecithin, Mono-, Di- und Triglyceriden, Lecithin und seinen Gemischen mit Sorbitanestern, Fettsäuren, Fettalkoholen, Wachsen und Wachsestern, Polyethylenwachsen, Amidwachsen und Mischungen aus einem oder mehreren daraus.

Gegebenenfalls - jedoch nicht erfindungsgemäß - kann vorgesehen sein, dass der Gelbildner ein polymerer Gelbildner mit einem Molekulargewicht von über 4000 g/Mol ist, wobei der Gelbildner vorzugsweise ausgewählt ist aus Polyethylen, Ethylcellulose oder einer Mischung daraus.

Erfindungsgemäß ist vorgesehen, dass die Formulierung zusätzlich ein chemisches Vernetzungsmittel umfasst, oder dass die immobilisierbare Flüssigkeit ein chemisches Vernetzungsmittel ist.

Es ist vorgesehen, dass das chemische Vernetzungsmittel ein Vernetzungsmittel ist, welches durch Kontakt mit Sauerstoff ein kovalent gebundenes Polymer bildet, und/oder dass das chemische Vernetzungsmittel ein Vernetzungsmittel ist, welches durch UV-Einstrahlung ein kovalent gebundenes Polymer bildet, und/oder dass das chemische Vernetzungsmittel ein Vernetzungsmittel ist, welches durch Kontakt mit Wasser und/oder Wasserdampf ein kovalent gebundenes Polymer bildet.

Erfindungsgemäß ist vorgesehen, dass das chemische Vernetzungsmittel ein trocknendes Öl ist.

Gegebenenfalls kann vorgesehen sein, dass das halbtrocknende oder trocknende Öl ausgewählt ist aus Leinöl, Fischöl, Holzöl (Tungöl), Maiskeimöl, Sojaöl oder einer beliebigen Mischung daraus.

Gegebenenfalls kann vorgesehen sein, dass die Formulierung ein Trocknungsmittel umfasst, wobei das Trocknungsmittel vorzugsweise ein Fettsäuresalz von Co, Zr, und/oder Ca ist.

Es ist vorgesehen, dass die Formulierung ein Casson-Fluid ist.

Gegebenenfalls kann vorgesehen sein, dass die Formulierung einen Geruchsstoff umfasst, oder dass die immobilisierbare Flüssigkeit ein Geruchsstoff ist, und/oder dass das chemische Vernetzungsmittel ein Geruchsstoff ist.

Gegebenenfalls kann vorgesehen sein, dass der Geruchsstoff ausgewählt ist aus Lavendinöl, Lavendelöl, Weinraukenöl, Baldrianwurzelöl, gemahlene Baldrianwurzel, Isovaleriansäure, Valeriansäure, Buttersäure, Propionsäure, Essigsäure, Ameisensäure, Lanolinfettsäuren, Fischölfettsäuren, Schaffett, 2-Undecanon, Fischöl, Tungöl oder beliebigen Mischungen daraus.

Gegebenenfalls kann vorgesehen sein, dass die Formulierung zusätzlich feste Partikel enthält, wobei die Partikel vorzugsweise eine durchschnittliche Partikelgröße von 0,05 mm bis 5 mm aufweisen.

Gegebenenfalls kann vorgesehen sein, dass die Formulierung zusätzlich einen Emulgator enthält.

Gegebenenfalls kann vorgesehen sein, dass der Emulgator ausgewählt ist aus Wollwachs, Wollfettsäuren, Rizinusöl, hydriertem Rizinusöl, Stearylcetylalkohol, Lecithin, verschiedenen Polysorbaten oder beliebigen Mischungen daraus.

Gegebenenfalls kann vorgesehen sein, dass die Formulierung einen anorganischen Füllstoff enthält.

Gegebenenfalls kann vorgesehen sein, dass der Füllstoff ausgewählt ist aus Calciumcarbonat, Talk, polymerer Kieselsäure, Kaolin oder beliebigen Mischungen daraus.

Gegebenenfalls kann vorgesehen sein, dass die Formulierung ein Pigment enthält oder mit einem Pigment eingefärbt ist.

Gegebenenfalls kann vorgesehen sein, dass das Pigment ausgewählt ist aus Kreide, Titandioxid, Eisenoxiden oder beliebigen Mischungen daraus.

Gegebenenfalls liegt der Anteil des Gelbildners in der erfindungsgemäßen Formulierung zwischen 5 g/kg und 250 g/kg, bezogen auf das Gesamtgewicht der Formulierung.

Beschrieben, jedoch nicht beansprucht, ist ein Verfahren zur Herstellung einer erfindungsgemäßen Formulierung umfassend die Schritte:
- Vermischen der Komponenten der Formulierung,
- Erwärmen der erhaltenen Mischung zum Aufschmelzen des bei Raumtemperatur festen oder halbfesten Gelbildners zur Bildung einer flüssigen Mischung.

Insbesondere liegen nach dem Aufschmelzen wenigstens der Gelbildner und die immobilisierbare Flüssigkeit als flüssige Stoffe vor. Auch andere Stoffe, beispielsweise optional enthaltene Emulgatoren, können aufgeschmolzen werden. Gegebenenfalls enthaltene nicht schmelzbare Komponenten, beispielsweise Füllstoffe, Pigmente, etc. können weiterhin als Feststoff vorliegen.

Gegebenenfalls umfasst das Verfahren nachfolgend den Schritt:
- Abkühlen der erhaltenen Mischung, wobei die Abkühlung bevorzugt auf eine Temperatur erfolgt, die 5° C über bis 20° C unter dem Erstarrungspunkt des Gelbildners liegt.

Gegebenenfalls umfasst das Verfahren nachfolgend den Schritt:
- weiteres Abkühlen der Mischung mit einer Abkühlrate von mehr als 1 K/s, bevorzugt auf eine Temperatur zwischen 0 und 30° C, besonders bevorzugt zwischen 5 und 20° C.

Durch die rasche Abkühlrate von mehr als 1 K/s wird die Gelbildung verbessert.

Gegebenenfalls wird zum Abkühlen der Flüssigkeit zusätzliche immobilisierbare Flüssigkeit zugegeben, deren Temperatur unter der Temperatur der Mischung liegt. Bevorzugt beträgt die Temperatur der zusätzlich zugegebenen immobilisierbaren Flüssigkeit weniger als 0°C, mehr bevorzugt weniger als -10°C.

Die Erfindung betrifft ferner eine Applikationsvorrichtung zum Lagern, Transportieren und Ausbringen einer Formulierung, in der eine Formulierung zur erfindungsgemäßen Verwendung als Mittel zur Tierabwehr angeordnet ist, wobei die Applikationsvorrichtung ein Behältnis zur Aufnahme des Mittels zur Tierabwehr mit einer Auslassöffnung, sowie einen Pressmechanismus zur Druckbeaufschlagung des Behältnisses umfasst.

Gegebenenfalls kann vorgesehen sein, dass der Pressmechanismus derart ausgebildet ist, um eine Schubspannung zu erzeugen, die dazu geeignet ist, die Fließgrenze der Formulierung zu überwinden.

Die Erfindung betrifft ferner ein Verfahren zur Bereitstellung eines Mittels zur Tierabwehr umfassend den Auftrag einer Formulierung zur erfindungsgemäßen Verwendung auf eine Oberfläche.

Gegebenenfalls kann vorgesehen sein, dass die Formulierung in Form von länglichen zylinderförmigen Raupen aufgetragen wird.

Die Aufgabe der Erfindung wird gegebenenfalls durch eine neuartige fluide Formulierung mit einem spezifischen Fließverhalten gelöst.

Beschrieben, jedoch nicht beansprucht, ist ein Verfahren zur Herstellung einer Abwehrvorrichtung gegen Wildverbiss, bei dem ein erfindungsgemäßes Mittel raupen-, streifen-, oder punktförmig appliziert wird. Gegebenenfalls ist ferner ein zum Auftrag des erfindungsgemäßen Mittels geeigneter Dosierspender vorgesehen.

Das erfindungsgemäße Mittel zeichnet sich dadurch aus, dass es ein nicht newtonsches Fluid in Form eines plastischen Fluids ist, bei welchem zum Erreichen des Fließzustandes bzw. des Fließens erst eine Mindestschubspannung zur Überwindung der Fließgrenze aufgewendet werden muss. Vor dem Erreichen der Fließgrenze verhält sich das Fluid wie ein Feststoff und wird durch einwirkende Kräfte elastisch verformt. Im Stand der Technik sind verschiedene nicht newtonsche Fluide mit einer Fließgrenze bekannt. Eine nicht newtonsche Flüssigkeit bezeichnet ein Fluid, das keine konstante Viskosität aufweist. Bei einem nicht newtonschen Fluid hängt die Viskosität von der Schergeschwindigkeit ab.

Beispielsweise ist ein Casson-Fluid eine nicht newtonsche Flüssigkeit in der Form eines plastischen Fluids in Zusammenhang mit der vorliegenden Erfindung. Bei einem Casson-Fluid liegt nach dem Überschreiten der Fließgrenze keine lineare Proportionalität zwischen der Schergeschwindigkeit dv/dy und der Schubspannung τ vor. Das bedeutet, dass zum Erreichen des Fließens bei Casson-Fluiden erst eine Mindestschubspannung aufgewendet werden muss, ehe das Fluid fließt. Vor Erreichen dieser Grenze verhält sich das Fluid wie ein Feststoff und wird nur elastisch verformt. Ist die Fließgrenze aber überschritten, steigt die Schubspannung nicht linear mit der Schergeschwindigkeit an - in diesem Bereich besteht dann ein pseudo-plastisches Verhalten.

Ein weiteres Beispiel für eine nicht newtonsche Flüssigkeit in der Form eines plastischen Fluids ist ein Bingham-Fluid, bei dem nach Überschreiten der Fließgrenze eine Proportionalität zwischen der Schergeschwindigkeit dv/dy und der Schubspannung τ und somit ein ideal-plastisches Verhalten vorliegt. Vor Erreichen der Fließgrenze verhält sich das Fluid wie ein Feststoff und wird nur elastisch verformt.

In Zusammenhang mit der vorliegenden Erfindung kann ein plastisches Fluid also ein Fluid mit nicht newtonschem Fließverhalten sein, bei dem erst oberhalb einer Fließgrenze ein pseudoplastisches Fließverhalten vorliegt. Dahingegen kann unterhalb der Fließgrenze ein elastisches Verhalten vergleichbar mit einem Feststoff vorliegen. Insbesondere kann die Fließgrenze einen Grenzwert für die aufzuwendende Schergeschwindigkeit bezeichnen. Die Fließgrenze kann auch einen Grenzwert für die aufzuwendende Scherkraft bezeichnen.

Für die die exakte Bestimmung der Fließgrenze werden bevorzugt Rheometer, wie beispielsweise MCR 102 (Anton Paar Germany GmbH) verwendet. Ob eine Formulierung grundsätzlich eine Fließgrenze aufweist kann der Fachmann jedoch auch optisch leicht erkennen. Fluide mit einer Fließgrenze lassen sich mechanisch leicht formen. Behält das Fluid ohne Auftreten einer Erschütterung längere Zeit in dieser Form, ist es wahrscheinlich, dass eine Fließgrenze vorliegt.

Als besonders geeignet für die Ausführung der Erfindung haben sich Gele mit dem Fließverhalten eines Casson-Fluids herausgestellt. Die anspruchsgemäß verwendete Formulierung ist demgemäß ein Casson-Fluid.

In Zusammenhang mit der vorliegenden Erfindung werden als Gele Systeme bezeichnet, in welchen eine flüssige Phase durch ein dreidimensionales Netzwerk immobilisiert ist. Daher umfassen Gele gemäß der vorliegenden Erfindung mindestens eine Flüssigkeit und einen Gelbildner.

Durch das beschriebene Fließverhalten sind die erfindungsgemäßen Formulierungen besonders gut zur Applikation auf forst- und landwirtschaftliche Pflanzen und anderen Substraten wie Stützpfosten, Begrenzungen aus Holz oder Metall, etc. geeignet.

Ein wichtiger Parameter ist die Scherkraft, welche zum Erreichen der Fließgrenze benötigt wird. Ist die Scherkraft zu niedrig, kann es schon durch das unbeabsichtigte Berühren des Pflanzenteils zur Verflüssigung des applizierten Gels kommen und somit eventuell zu einem Abtropfen des applizierten Fluids. Ist die Scherkraft zum Erreichen der Fließgrenze zu hoch, haftet das Fluid nicht ausreichend auf der behandelten Fläche.

Als besonders geeignet für die Ausführung der Erfindung haben sich lipophile Gele mit dem Fließverhalten eines Casson-Fluids herausgestellt.

In Zusammenhang mit der vorliegenden Erfindung werden als "lipophile Gele" Systeme bezeichnet, in denen eine organische flüssige Phase durch ein dreidimensionales Netzwerk immobilisiert ist. Daher umfassen lipophile Gele gemäß der vorliegenden Erfindung mindestens eine organische Flüssigkeit und einen Gelbildner.

Gelbildner können aufgrund ihres Molekulargewichts in niedermolekulare Gelbildner mit einem Molekulargewicht von unter 4000 g/Mol und polymere Gelbildner mit einem Molekulargewicht von über 4000 g/Mol eingeteilt werden. Anspruchsgemäß werden niedermolekulare Gelbildner mit einem Molekulargewicht von unter 4000 g/Mol eingesetzt.

Beispiele für niedermolekulare Gelbildner, die in Zusammenhang mit der vorliegenden Erfindung verwendet werden können, sind: 12-Hydroxystearinsäure (HSA), (1,3:2,4)-Dibenzylidensorbitol (DBS), Sterole, Lecithin, Mono-, Di- und Triglyceride, Lecithin und seine Gemische mit Sorbitanestern, Fettsäuren, Fettalkohole, Wachse und Wachsester, Polyethylenwachse, Amidwachse und Mischungen aus einem oder mehreren der genannten Gelbildner.

Gegebenenfalls kann das erfindungsgemäße Mittel ferner einen Emulgator umfassen, um die Streichbarkeit Pflanzen und Pflanzenteile zu verbessern. Beispiele für Emulgatoren, die in Verbindung mit der vorliegenden Erfindung eingesetzt werden können, sind Wollwachs, Wollfettsäuren, Rizinusöl, hydriertes Rizinusöl, Stearylcetylalkohol, Lecithin, verschiedene Polysorbate. Sind diese im erfindungsgemäßen Mittel enthalten, verbessern sie die Applizierbarkeit des Mittels deutlich. Besonders auf feuchten Pflanzen oder Pflanzenteilen wird die Applizierbarkeit und Haftung verbessert. Es wurde festgestellt, dass Wollwachs und Wollfettsäure durch ihren Gehalt an Wachsalkoholen, Wachssäuren und Fettsäuren und Rizinusöl durch seine Hydroxyl-Gruppe ähnlich wie die genannten weiteren Emulgatoren Stearylcetylalkohol, Lecithin und Polysorbate wirken. Dadurch kann die lipophile Formulierung geringe Mengen Wasser aufnehmen, was die Applizierbarkeit und Haftung grundsätzlich, aber besonders auf feuchte Pflanzen verbessert.

Die vorstehende Aufzählung stellt keine Einschränkung der verwendbaren Stoffe für die Herstellung eines Mittels mit kontrollierter Freisetzung für Geruchsstoffe zur Tierabwehr und im speziellen zur Wildabwehr dar.

Im Gegensatz zu niedermolekularen Gelbildnern, welche zu unterschiedlichsten chemischen Klassen gehören und für die Immobilisierung verschiedenster Flüssigkeiten geeignet sind, ist die Anzahl der aktuell bekannten polymeren Gelbildner auf wenige Stoffe beschränkt. Beispiele für polymere Gelbildner die in Zusammenhang mit der vorliegenden Erfindung verwendet werden können sind Polyethylen und Ethylcellulose.

In Zusammenhang mit der vorliegenden Erfindung können Gele als physikalische Gele bezeichnet werden. Physikalische Gele von Gelbildnern sind thermoreversibel. Unterhalb einer kritischen Temperatur liegen sie als Gel, oberhalb als Lösung vor. Die treibende Kraft für die Initiierung der Gelierung und Bildung ihrer Netzwerke können schwache, nicht-kovalente Wechselwirkungen wie Van-der-Waals-Wechselwirkungen, π-π-Wechselwirkungen, intermolekulare Wasserstoffbrückenbindung, ionische oder metallorganische Bindungen oder eine Kombination dieser genannten Wechselwirkungen sein.

Als besonders vorteilhaft für die Anwendung als Wildverbissmittel haben sich Formulierungen von physikalischen Gelen, die zusätzlich ein chemisches Vernetzungsmittel erhalten, herausgestellt. Das chemische Vernetzungsmittel bildet nach der Applikation der Formulierung ein zusätzliches irreversibles chemisches Netzwerk zur Verstärkung des Gels aus.

Gemäß einer bevorzugten Ausführungsform kann ein derartiges Gel beispielsweise aus der zu immobilisierenden Flüssigkeit (z.B. einem nichttrocknenden Öl, wie Olivenöl, HO-Sonnenblumenöl), einem halbtrocknenden und/oder trocknenden Öl, sowie aus einem Gelbildner bestehen. Alternativ kann die zu immobilisierende Flüssigkeit kann auch selbst ein halbtrocknendes und/oder trocknendes Öl sein. Beispiele für halbtrocknende und trocknende Öle sind Leinöl, Fischöl, Holzöl (Tungöl), Maiskeimöl, Sojaöl und weitere dem Fachmann bekannte Öle. Der Gelbildner formt dabei aus dem Öl das physikalische Gel mit den Fließverhalten eines Casson-Fluid aus und das trocknende oder halbtrocknende Pflanzenöl bildet nach der Applikation durch Kontakt mit Luftsauerstoff ein dreidimensionales chemisches Netzwerk, das bei Normalbedingungen nicht reversibel ist, aus.

In Zusammenhang mit der vorliegenden Erfindung können Öle, die bei Kontakt mit Sauerstoff nicht polymerisieren bzw. verharzen als nicht trocknende Öle bezeichnet werden. In Zusammenhang mit der vorliegenden Erfindung können Öle, die bei Kontakt mit Sauerstoff teilweise polymerisieren bzw. verharzen als halbtrocknende Öle bezeichnet werden. In Zusammenhang mit der vorliegenden Erfindung können Öle, die bei Kontakt mit Sauerstoff polymerisieren bzw. verharzen als trocknende Öle bezeichnet werden. Nichttrocknende Öle können insbesondere eine Iodzahl von unter 100 aufweisen. Halbtrocknende Öle können insbesondere eine Iodzahl von zwischen 100 und 140 aufweisen. Trocknende Öle können insbesondere eine Iodzahl von über 140 aufweisen.

In der weiteren Beschreibung werden physikalische lipophile Gele mit dem Potential nach der Applikation ein chemisch gebundenes Netzwerk zu bilden auch als Hybridgele bezeichnet.

Gegebenenfalls können im erfindungsgemäßen Mittel zusätzlich Geruchsstoffe enthalten sein. Geruchsstoffe zur Tierabwehr und im speziellen zur Wildabwehr, die in dem erfindungsgemäßen Mittel und insbesondere in lipophilen Hybridgelen enthalten sein können, sind Lavendinöl, Lavendelöl, Weinraukenöl, Baldrianwurzelöl, gemahlene Baldrianwurzel, Isovaleriansäure, Valeriansäure, Buttersäure, Propionsäure, Essigsäure, Ameisensäure, Lanolinfettsäuren, Fischölfettsäuren, Schaffett, 2-Undecanon oder Mischungen aus einem oder mehreren dieser Geruchsstoffe.

Das erfindungsgemäße Mittel, insbesondere ein lipophiles Hybridgel kann gegebenenfalls auch feste anorganische oder organische Partikel enthalten. Diese anorganischen oder organischen Partikel weisen bevorzugt eine Partikelgröße von 0,05 bis 5 mm auf, um über das Mundgefühl zu wirken. Beispiele für derartige in Verbindung mit der vorliegenden Erfindung geeignete Partikel sind gedämpfte Schweinborsten, Quarzsand und andere Sande, sowie Hornmehl/Hornspäne oder Mischungen aus mehreren dieser Stoffe.

Die Aufzählung stellt keine Einschränkung der verwendbaren Geruchstoffe oder mechanisch wirkenden Repellents für die Herstellung eines Mittels zur Tierabwehr dar.

Gegebenenfalls kann auch die zu immobilisierende Flüssigkeit, oder das halbtrocknende oder trocknende Öl selbst als Geruchsstoff wirken und eine repellierende Wirkung aufweisen. Beispiele für geeignete Stoffe sind Fischöl und Tungöl (Holzöl). Fischöl ist ein dem Fachmann bekanntes Repellent. Tungöl besteht bis zu über 80 % aus den Glyceriden der α-Elaeostearinsäure, einer dreifach ungesättigten Fettsäure und zeichnet sich beim Altern durch einen an ranzigen Speck erinnernden Geruch aus, welcher auf Wildtiere eine stark repellierende Wirkung hat.

Die oxidative Ausbildung des kovalent bzw. chemisch gebundenen Netzwerkes kann durch Trocknungsmittel/Sikkative katalysiert werden. Typische Sikkative sind Seifen, also metallische Fettsäuresalze, von Co, Zr und Ca. Die Einsatzkonzentration der Sikkative ist typischerweise 0,03 - 0,10 % Co 0,10 - 0,30 % Ca 0,04 - 0,10 % Zr als Metall, bezogen auf den Gewichtsanteil trocknender oder halbtrocknender Komponenten der Formulierung.

Neben einem Vermittler von oxidativem Trocknungsvermögen ist aber auch vorstellbar verschiedene UV-härtende Mittel in das physikalische Gel einzuarbeiten, welche nach der Applikation durch UV-Einstrahlung ein chemisch gebundenes dreidimensionales Netzwerk bilden.

Durch das Fließverhalten eines Casson-Fluids des physikalischen Gels und die Ausformung eines irrreversiblen, kovalent gebundenen dreidimensionalen Netzwerkes nach der Applikation sind bevorzugte Ausführungsformen des erfindungsgemäßen Mittels besonders gut zur Applikation auf forst- und landwirtschaftliche Pflanzen aber auch anderen Substraten wie Stützpfosten, Begrenzungen aus Holz oder Metall, etc., welche im Forst oder der Landwirtschaft verwendet oder benötigt werden, geeignet. Nach der Applikation und der Ausbildung des irreversiblen dreidimensionalen Netzwerkes können die applizierten Gele nur mehr mit einem erheblichen Aufwand mechanisch entfernt werden.

Ein weiterer Vorteil von lipophilen Hybridgelen ist, dass sie wasserarme oder wasserfreie Formulierungen darstellen, womit im Vergleich zu herkömmlichen Formulierungen auf Wasserbasis erhebliche Gewichtsmengen eingespart werden können.

Als bevorzugte Verpackung für die wildabwehrenden lipophilen Hybridgele, aus welcher die Applikation direkt, ohne Verdünnen, Umfüllen und ohne weiteres Werkzeug und mit minimaler Gefahr der Kontamination des Anwenders auf die Pflanzen oder jeden anderen Zielort in der jeweils richtigen Dosis erfolgen kann, haben sich Kartuschen-Systeme herausgestellt.

Es wurde gefunden, dass sich solche Kartuschen mit einer entsprechenden Dosierdüse hervorragend für diese Aufgabe eignen. Neben der Wirkung als dichtschließender Behälter eignen sich solche Kartuschen-Systeme zum einfachen und genauen, sowohl orts- wie auch mengenmäßigem Applizieren eines erfindungsgemäßen Mittels zur Tierabwehr.

Neben der grundsätzlich einfachen und sicheren Methode wurden noch weitere verschiedene Vorteile gefunden.

Durch die genaue Dosierungsmenge und einfache Angabe dieser, wie etwa "applizieren sie eine Raupe von ca. 50 mm Länge von unten nach oben auf den Terminaltrieb", wird jede Pflanze mit der annährend gleichen Menge an Wildabwehrmittel behandelt. In einem Versuch wurde festgestellt, dass die oben genannte Angabe zu einem deutlich geringeren Verbrauch von geeigneten Formulierungen führt. Wird die Dosierspitze so abgeschnitten, dass ein freier Querschnitt von ca. 3 mm entsteht, werden mit einer 50 mm langen Raupe immer nur 0,35 bis 0,40 ccm des Mittels ausgebracht.

Im Vergleich dazu kann eine beispielhafte kommerziell erhältliche Formulierung gegen Wildverbiss ca. 28,5 g/l repellierenden Wirkstoff in Form von Fischöl in einer lösungsmittelbasierten Formulierung enthalten. Die Aufwandmenge beträgt ca. 2 ml pro Setzling. Also werden ca. 57 mg repellierender Wirkstoff pro Pflanze appliziert. Eine entsprechende beispielhafte lipophile Hybridgelformulierung gemäß der vorliegenden Erfindung kann 160 g/l Fischöl enthalten. Um die gleiche Menge repellierenden Wirkstoff zu applizieren werden nur 0,35 ccm dieser Formulierung benötigt. Damit kann die zu produzierende Menge, das Verpackungsmaterial, die Lager- und Transportmenge etwa um den Faktor 5,6 reduziert werden.

Ein weiterer Vorteil des Auftrags mittels Kartuschen-System ist, dass durch die genaue Möglichkeit der Dosierung und durch das raupenförmige Auftragen nicht der gesamte Terminaltrieb und die Terminalknopse verschmiert werden und es dadurch möglich ist einfache Formulierungen und Mittel einzusetzen, welche bei einer kompletten Bedeckung von Trieb und Knospe und/oder einer Überdosierung zu phytotoxischen Erscheinungen führen können.

Durch seine rheologischen Eigenschaften hat das Fluid in der Kartusche im Ruhezustand das Verhalten eines Feststoffes. Sobald über die entsprechenden Elemente des Kartuschen-Systems bzw. des Dosierspenders die Formulierung einer Scherkraft ausgesetzt wird, sinkt die Viskosität schlagartig ab, das Fluid fließt über die Dosierdüse auf die zu behandelten Teile der Pflanze oder jeder anderen zu behandelten Fläche, und wird nach dem Wegfall der Scherkraft schlagartig wieder fest. Dadurch kann es zu keiner Kontamination von nicht zu behandelnden Teilen oder der Umgebung der Pflanze, oder anderen, zu behandelnden, Flächen kommen.

Weitere Merkmale der Erfindung ergeben sich aus der Figur, sowie aus den Ausführungsbeispielen.

Nachfolgend wird die vorliegende Erfindung anhand von exemplarischen Ausführungsbeispielen im Detail erläutert. Die Ausführungsbeispiele dienen nur der Veranschaulichung der Wirkungen der Erfindung, sollen den Schutzbereich jedoch nicht beschränken.
Fig. 1 zeigt eine schematische Ansicht eines Querschnitts einer applizierten Raupe einer erfindungsgemäßen Formulierung; und
Fig. 2 zeigt ein exemplarisches Anwendungsbeispiel der erfindungsgemäßen Formulierung.

Wenn nicht anders bezeichnet, zeigen die Bezugszeichen die folgenden Elemente: Raupe 1, Außenschicht 2, Kern 3, Übergangsbereich 4, Aluminiumfolie 5, Befestigungsnagel 6.

### Beispiel 1

### Herstellungsprozess I:

Die Rohstoffe wurden in einem metallischen Rührgefäß, das mit einem elektronischen Thermometer ausgerüstet war, mittels einer elektrischen Heizplatte erwärmt und händisch mit einer Spatel gerührt. Bei 80° C waren die festen und halbfesten Bestandteile (Wollwachs und hydriertes Rapsöl) geschmolzen und die Formulierung war eine klare Flüssigkeit. Die Flüssigkeit wurde dann bei Raumtemperatur auf 52° C abgekühlt und 100 g der Formulierung durch ausgießen und verstreichen mit einem Rakel auf eine 10 mm dicke Stahlplatte, Durchmesser 300 mm, mit einer Temperatur von -15° C, schlagartig auf 7° C abgekühlt. Es formten sich lipophile Gele mit den in Tabelle 1 beschriebenen rheologischen Eigenschaften.

**Tabelle 1**

| Rohstoff | | | | Funktion | Formulierung/Konzentration in g | | | | | | | | | |
|---|---|---|---|---|---|---|---|---|---|---|---|---|---|---|
| | | | | | 1A | 1B | 1C | 1D | 1E | 1F | 1G | 1H | 11 | 1J |
| Olivenöl | | | | IF | 925 | | | | | 925 | 900 | | | 900 |
| Maiskeimöl | | | | IF/OV | | 925 | 900 | 775 | 775 | | | | | |
| Lardöl | | | | IF/OV | | | | | | | | 925 | | |
| Jojobaöl | | | | IF | | | | | | | | | 900 | |
| Wollwachs | | | | EM | | | | 150 | 150 | | | | | |
| Hydriertes Rapsöl | | | | GB | 75 | 75 | 100 | 75 | | | | | | |
| Hyd. Sonnenblumenöl | | | | GB | | | | | | 75 | 100 | 75 | | |
| Zuckerrohrwachs | | | | GB | | | | | | | | | 100 | |
| Hammeltalg/Schaffett | | | | GB | | | | | | | | | | 100 |
| | | | | | | | | | | | | | | |

| Herstellungsprozess | | | | | I | I | I | I | I | I | I | I | I | I |
|---|---|---|---|---|---|---|---|---|---|---|---|---|---|---|
| | | | | | | | | | | | | | | |
| Fließgrenze bei 0° C (Pa) | | | | | 293 | 288 | 590 | n.b. | n.b. | 296 | 611 | 280 | n.b. | n.b. |
| Fließgrenze bei 25° C (Pa) | | | | | 86 | 80 | 174 | 147 0 | k. F. | 81 | 193 | 78 | 240 | k.F. |
| Fließverhalten oberhalb der Fließgrenze | | | | | SV | SV | SV | SV | n.b. | SV | SV | SV | SV | n.b. |

Legende zur Tabelle:
Funktion: IF = zu immobilisierende Flüssigkeit; OV = oxidativ trocknendes Vernetzungsmittel; EM = Emulgator; GB = Gelbildner
Fließverhalten: k.F. = keine Fließgrenze; SV = Scherverdünnend (pseudoplastisch); n.b. = nicht bestimmt.

### Rheometrie:

Messgerät: MCR 102 (Anton Paar Germany GmbH)
Temperiereinrichtung: Peltier-Platte mit passiver Kupferhaube (P-PTD200/Air) Messgeometrie: CP25-1 (Messkegel mit 25mm Durchmesser und 1° Winkel)
Versuchsbeschreibung:
   Die Proben wurde auf die untere Platte mittels Spatel aufgetragen und zunächst ein Spalt von 55µm angefahren. Dabei wird überschüssiges Material aus dem Messspalt gedrängt und mittels Spatel entfernt. Dann wurde der Messspalt von 49µm angefahren. Bevor die Messung gestartet wurde, wurde gewartet bis die Normalkraft auf unter ca. 1N abgesunken ist. Im Fall der Probe D sank die Normalkraft nach Erreichen des Messspaltes von 49 µm nicht unter ca. 6N.

Die Schubspannung wurde von 1 auf 1000 Pa (bzw. 10000 Pa für Formulierung D und A2) (1000 Messpunkte, 1 s Messpunktdauer) erhöht. Als Fließgrenze wird die Schubspannung angegeben, bei der die Probe anfängt zu fließen. Dies resultiert in einer von Null verschiedenen messbaren Scherrate. Es wird diejenige Schubspannung als Fließgrenze angegeben, bei der die Scherrate von 0,01 1/s überschritten wird. Anmerkung: Diese Definition der Fließgrenze kann vom Messgerät abhängig sein.

### Beispiel 2

In einer weiteren Versuchsserie wurde die Formulierung 2A (Tab. 2) mittels drei verschiedener Prozesse hergestellt.

### Herstellungsprozess I:

Die Rohstoffe wurden in einem metallischen Rührgefäß, das mit einem elektronischen Thermometer ausgerüstet war, mittels einer elektrischen Heizplatte erwärmt und händisch mit einer Spatel gerührt. Bei 80° C waren die festen Bestandteile (Wollwachs und hydriertes Rapsöl) geschmolzen und die Formulierung war eine klare Flüssigkeit. Die Flüssigkeit wurde dann bei Raumtemperatur auf 52° C abgekühlt und 100 g der Formulierung durch Ausgießen und Verstreichen mit einem Rakel auf eine 10 mm dicke Stahlplatte, Durchmesser 300 mm, mit einer Temperatur von -15° C schlagartig auf 7° C abgekühlt und es formte sich ein lipophiles Gel mit den in Tab. 2 beschrieben rheologischen Eigenschaften.

### Herstellungsprozess II:

Die Rohstoffe wurden unter Zurückhaltung von 500 g Maiskeimöl in einem metallischen Rührgefäß, das mit einem elektronischen Thermometer ausgerüstet war, mittels einer elektrischen Heizplatte erwärmt und händisch mit einer Spatel gerührt. Bei 80° C waren die festen Bestandteile (Wollwachs und hydriertes Rapsöl) geschmolzen und die Formulierung war eine klare Flüssigkeit. Die Flüssigkeit wurde dann bei Raumtemperatur auf 48° C abgekühlt. In der Zwischenzeit wurden die zurückbehaltenen 500 g Maiskeimöl in einem metallischen Rührgefäß auf -14° C abgekühlt und die warme und kalte Phase unter Rühren vereint. Dadurch wurde die warme Phase schlagartig auf 18,5° C abgekühlt und es formte sich ein lipophiles Gel mit den in Tab. 2 beschrieben rheologischen Eigenschaften.

### Herstellungsprozess III:

Die Rohstoffe wurden in einem metallischen Rührgefäß, das mit einem elektronischen Thermometer ausgerüstet war, mittels einer elektrischen Heizplatte erwärmt und händisch mit einer Spatel gerührt. Bei 80° C waren die festen Bestandteile (Wollwachs und hydriertes Rapsöl) geschmolzen und die Formulierung war eine klare Flüssigkeit. Die Flüssigkeit wurde dann bei Raumtemperatur auf 30° C abgekühlt und dann im Wasserbad um weitere 12° C auf 18° C abgekühlt. Dabei formte sich eine viskose, inhomogene Suspension.

**Tabelle 2**

| Rohstoff | Funktion | Formulierung/ Konzentration in g | | |
|---|---|---|---|---|
| | | 2Ai | 2Aii | 2Aiii |
| Maiskeimöl | IF/OV | 640 | 640 | 640 |
| Lachsöl | OV | 160 | 160 | 160 |
| Wollwachs | EM | 120 | 120 | 120 |
| Hydriertes Rapsöl | GB | 80 | 80 | 80 |
| | | | | |
| Herstellungsprozess | | I | II | III |
| | | | | |
| Fließgrenze bei 0° C (Pa) | | 1500 | 1450 | Keine Fließgrenze |
| Fließgrenze bei 25° C (Pa) | | 688 | 672 | |
| Fließgrenze bei 40° C (Pa) | | 113 | 103 | |
| Fließverhalten oberhalb der Fließgrenze | | SV | SV | n.B. |

Legende zur Tabelle:
Funktion: IF = zu immobilisierende Flüssigkeit; ON = oxidativ trocknendes Vernetzungsmittel; EM = Emulgator; GB = Gelbildner
Fließverhalten: SV = Scherverdünnend (pseudoplastisch). n.b. = nicht bestimmt.

### Rheometrie:

Messgerät: MCR 102 (Anton Paar Germany GmbH)
Temperiereinrichtung: Peltier-Platte mit passiver Kupferhaube (P-PTD200/Air)
Messgeometrie: CP25-1 (Messkegel mit 25mm Durchmesser und 1° Winkel)

### Versuchsbeschreibung:

Die Proben 2Ai und 2Aii wurden auf die untere Platte mittels Spatel aufgetragen und zunächst ein Spalt von 55µm angefahren. Dabei wird überschüssiges Material aus dem Messspalt gedrängt und mittels Spatel entfernt. Dann wird der Messspalt von 49µm angefahren. Bevor die Messung gestartet wird, wird gewartet bis die Normalkraft auf unter ca. 1N abgesunken ist.

Probe 2Aiii wurde zunächst kräftig geschüttelt und dann mit einer Pipette auf die untere Platte aufgetragen und zunächst ein Spalt von 110µm angefahren. Dabei wird überschüssiges Material aus dem Messspalt gedrängt und mittels Zellstoff entfernt. Dann wird der Messspalt von 100µm angefahren. Bevor die Messung gestartet wird, wird gewartet bis die Normalkraft auf unter ca. 1N abgesunken ist.

### Fließgrenze/Fließverhalten:

Die Schubspannung wurde von 1 auf 10000 Pa (1000 Messpunkte, 1 s Messpunktdauer) erhöht. Als Fließgrenze wird die Schubspannung angegeben, bei der die Probe anfängt zu fließen. Dies resultiert in einer von Null verschiedenen messbaren Scherrate. Es wird diejenige Schubspannung als Fließgrenze angegeben, bei der die Scherrate von 0,01 1/s überschritten wird. Anmerkung: Diese Definition der Fließgrenze kann vom Messgerät abhängig sein.

### Beispiel 3

Tabelle 3 zeigt weitere auf Basis der oben beschriebenen Herstellungsverfahren hergestellte erfindungsgemäße Formulierungen.

**Tabelle 3**

| Rohstoff | Funktion | Formulierung/ Konzentration in g | | | | | |
|---|---|---|---|---|---|---|---|
| | | 3A | 3B | 3C | 3Di | 3Dii | 3E |
| Rapsmethylester | IF | 140 | 140 | | | | |
| Olivenöl | IF | 530 | 530 | 430 | 430 | 430 | 430 |
| Sojaöl | IF/OV | | | 300 | 300 | 300 | 300 |
| WorléeKyd S 7304 | OV | 120 | 90 | 60 | 60 | 60 | 60 |
| WorléeKyd RS 2174 | OV | | 30 | | | | |
| Wollwachs | EM | 120 | 120 | | 120 | 120 | |
| Sorbitantrioleat | EM | 10 | 10 | | 10 | 10 | 100 |
| Sojalecithin | | | | 130 | | | |
| Hydriertes Rapsöl | GB | 80 | 80 | 80 | 80 | 80 | 80 |
| | | | | | | | |
| Herstellungsprozess | | II | II | III | III | IV | II |
| | | | | | | | |
| Fließgrenze bei 0° C (Pa) | | 1500 | 1450 | 1255 | n.b. | k.F. | n.b. |
| Fließgrenze bei 25° C (Pa) | | 688 | 672 | 463 | 456 | | 320 |
| Fließverhalten oberhalb der Fließgrenze | | SV | SV | SV | SV | n.b. | SV |

### Beispiel 4

Die Formulierungen 1A, 1B, 1D, 2Ai, 2Aii, 3A, 3B, 3Ci und 3Di wurden in ein Kartuschen-System bestehend aus 75 ml fassende Kartuschen, (Kartusche Typ G 80, Firma Fischbach) Kolben, Schieber (Typ K 07 H und Schieber SP 80 PP, Fischbach) und Düse (D 08, Fischbach) gefüllt. Die Düsenspitze wurde so abgeschnitten, dass ein Querschnitt von ca. 3,5mm entstand. Damit wurden jeweils 5 ca. 40 mm lange Stränge der lipophilen Hybridgele in auf Aluminiumfolie appliziert. Die Folien wurden im Freien ohne direkte Sonnenbestrahlung senkrecht hängend an einer Holzleiste montiert. Die Tageshöchsttemperaturen lagen im Beobachtungszeitraum von 45 Tagen zwischen 12,5° C und 26,0° C die Tiefsttemperatur zwischen 0° und 14,6, wobei am ersten Tag des Beobachtungszeitraumes die Tageshöchsttemperatur 12,5 und die Tiefsttemperatur 5,7° C und am letzten Tag 13,4°C respektive 10,6°C war.

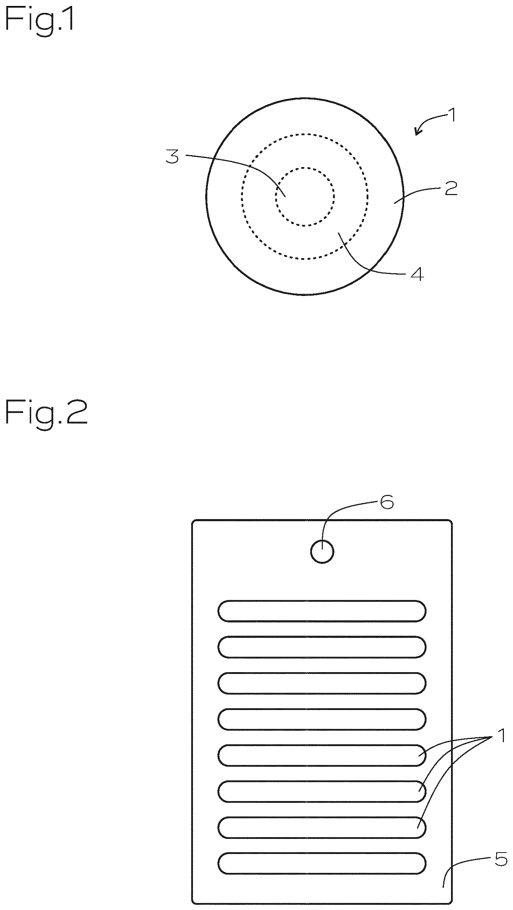

Bei den Formulierungen 3A, 3B, 3D und 3Di mit Alkydharzen, konnte bereits nach 3 Tagen eine leichte oberflächliche Hautbildung auf den Hybridgelsträngen beobachtet werden. Nach 5 bis 7 Tagen war die die Oberfläche durchgehend von einer dünnen Hülle umgeben. Bei den Formulierungen ohne Alkydharze wurde ab dem 5 Tag oberflächliche Hautbildung beobachtet. Ab dem 12 Tag war die war die gesamte Oberfläche von einer zähviskosen Oberfläche umgeben. Nach 45 Tagen wurden die Stränge mit in der Mitte durchgeschnitten. Im Querschnitt war deutlich die Zunahme der Viskosität von innen nach außen zu sehen. Dies ist in Fig. 1 illustriert.

Es wird eine applizierte Raupe 1 im Querschnitt gezeigt, wobei eine Außenschicht 2 vorhanden ist, welche aus verfestigter Formulierung gebildet ist. Im Kern 3 der Raupe 1 liegt die Formulierung in nicht verfestigter, gelartiger Form vor, da diese hier nicht mit Sauerstoff aus der Luft in Kontakt gekommen ist. Zwischen der festen Außenschicht 2 und dem Kern 3 ist ein Übergangsbereich 4 gebildet, in dem die Formulierung bzw. das chemische Vernetzungsmittel teilweise ausgehärtet oder polymerisiert ist.

Im Ruhezustand in der Applikationsvorrichtung bzw. im Dosierspender hat das Fluid das Verhalten eines Feststoffes. Sobald über die Kartuschenpistole des Dosierspenders die Formulierung einer Scherkraft ausgesetzt wird, sinkt die Viskosität schlagartig ab, fließt über die Düse auf die zu behandelten Teile der Pflanze oder jeder anderen Fläche, und wird nach dem Wegfall der Scherkraft schlagartig wieder fest. Durch die chemische Bildung von dreidimensionalen Netzwerken zur zusätzlichen Festigung des physikalischen Gels nach der Applikation haften die so hergestellten Gele irreversible auf den Zielorten und es kann es zu keiner Kontamination von nicht zu behandelten Teilen oder der Umgebung der Pflanze, oder anderen, nicht zu behandelten, Flächen kommen.

Fig. 2 zeigt das hier beschriebene exemplarische Anwendungsbeispiel der erfindungsgemäßen Formulierung nach dem Auftrag von Raupen 1 auf eine Aluminiumfolie 5. Wie oben beschrieben wurden fünf Raupen 1 einer erfindungsgemäßen Formulierung mittels einer Applikationsvorrichtung in Form eines Kartuschen-Systems mit Dosierdüse auf eine Aluminiumfolie 5 aufgetragen. Die Aluminiumfolie 5 kann gemeinsam mit den Raupen 1 mit einem Befestigungsnagel 6 beispielsweise auf einem Baumstamm oder an einem Pfahl befestigt werden.

### Beispiel 5

Mit den Formulierungen 1D, 2Ai und 3A wurden Applikationsversuche auf Fichtensetzlinge und in einem abgezäunten Areal durchgeführt. Als weitere Produkte wurden zwei kommerziell erhältliche nicht erfindungsgemäße Formulierungen (F1 und F2) auf Basis wässriger PVA-Dispersion im Test mit den erfindungsgemäßen lipophilen Hybridgelen verglichen. Die erfindungsgemäßen Hybridgele wurden mit der Hand und einem Kartuschen-System aufgetragen. Bei der Handapplikation wurde eine etwa bohnengroße Menge zwischen Daumen und Zeigefinger genommen und von unten nach oben auf den Terminaltrieb aufgestrichen. Für die Applikation mittels Kartuschen-System wurden die Hybridgele in eine handelsüblichen Kartusche, E 310 mit einem passenden Kolben, K 01 LO (Firma Fischbach) gefüllt. Die Hybridgele wurden über eine Düse, Rika Nozzle, 360 Grad drehbare Düse mit Kappe der Firma Innotech Rot mittels der Kartuschenpistole, Gigapress Kartuschenpistole 310 der Firma Innotech Rot appliziert.

Die wässrigen Vergleichsmittel, F1 und F2 (nicht erfindungsgemäß), wurden mit einem Streichhandschuh durch Eintauchen in die Formulierung und Abstreichen auf den Terminaltrieben und Knospen appliziert.

**Tabelle 4**

| Witterung | 5° C trocken | -2° C trocken | 2° C neblig | 15° C nach Regen | 12° C Regen | -2° C schwacher Reif |
|---|---|---|---|---|---|---|
| Produkt/Applikationsmethode | | | | | | |
| Applizierbarkeit | | | | | | |
| 1D/Hand | +++ | +++ | +++ | +++ | ++ | ++ |
| 2Ai/Hand | +++ | +++ | +++ | +++ | ++ | ++ |
| 3A/Hand | +++ | +++ | +++ | +++ | ++ | ++ |
| 1D/Kartusche | +++ | +++ | +++ | +++ | ++ | ++ |
| 2Ai/Kartusche | +++ | +++ | +++ | +++ | ++ | ++ |
| 3A/Kartusche | +++ | +++ | +++ | +++ | ++ | ++ |
| F1 | +++ | + | + | + | - | - |
| F2 | ++ | - | + | + | - | - |

| Haltbarkeit des Belages über einen Zeitraum von 12 Monaten | | | | | | |
|---|---|---|---|---|---|---|
| 1D/Hand | +++ | ++ | ++ | ++ | ++ | ++ |
| 2Ai/Hand | +++ | ++ | ++ | + | ++ | ++ |
| 3A/Hand | +++ | ++ | ++ | ++ | ++ | ++ |
| 1D/Kartusche | ++++ | ++++ | ++++ | ++++ | +++ | +++ |
| 2Ai/Kartusche | ++++ | ++++ | ++++ | +++ | +++ | +++ |
| 3A/Kartusche | ++++ | ++++ | ++++ | ++++ | +++ | +++ |
| F1 | + | k.B. | k. B. | k. B. | - | - |
| F2 | + | - | k. B. | k. B. | - | - |

| | | | | | | |
|---|---|---|---|---|---|---|
| Legende Applizierbarkeit +++ gut ++ zufriedenstellend + gerade noch möglich - Applikation nicht möglich Legende Haltbarkeit: ++++ Belagsstärke optisch nicht oder wenig verändert. +++ Belagsstärke optisch sichtbar verändert. ++ Belagsstärke deutlich reduziert. + Belag gerade noch sichtbar. k. B. kein Belag vorhanden. - kein Belag, da schon bei Versuchsbeginn kein Auftrag möglich war. | | | | | | |

In der Tabelle 4 ist der signifikante Unterschied zwischen den erfindungsgemäßen Formulierungen und den nicht erfindungsgemäßen Formulierungen sichtbar. 1D, 2Ai und 3A lassen sich auch bei Minustemperaturen und Regen oder feuchten Wetter zufriedenstellend bis gut mit der Hand applizieren und dem Kartuschen-System applizieren. Die auf PVP-Polymerdispersionen basierenden Formulierungen lassen sich bei Regen und nassem Wetter und Frost deutlich schlechter anwenden. Bei der Haltbarkeit über einen Zeitraum von 12 Monaten sind die wässrigen Formulierungen F10 und F11 auf Polymerdispersionsbasis signifikant schlechter als die erfindungsgemäße lipophilen Hybridgele 1D, 2Ai und 3A.

Zwischen der Applikation der lipophilen Hybridgele 1D, 2Ai und 3A mit der Hand und mittels des Kartuschen-Systems ist bei der Anwendung selbst kein Unterschied zu sehen. Hingegen ist bei der Beurteilung des verbliebenen Belags nach 12 Monaten ein signifikanter Unterschied. Die mittels Kartuschen-System applizierten Raupen sind in allen Fällen eine Beurteilungsstufe besser erhalten, als die mit der Hand aufgestrichenen Beläge.

Um die starke Reduktion von phytotoxischen Erscheinungen bei der Applikation von Wildverbissmitteln mittels Kartusche zu zeigen wurden folgende zwei nicht erfindungsgemäße Formulierungen durch einfaches Aufschmelzen der Rohstoffe und abkühlen auf Raumtemperatur mit Vaseline als Basis hergestellt.

### Beispiel 6

In einem Vergleichsversuch in dem die vaselinehaltigen Formulierung 5A und 5B mit einem Handschuh direkt auf Terminaltrieb -und Knospe von jeweils 20 Weißtannensetzlingen in zweifacher Wiederholung gestrichen wurde, wurde gegenüber der alternativen Applikationsmetode ein signifikanter Unterschied in Bezug auf die Phytotoxizität festgestellt. Bei der gebräuchlichen Applikationsmethode mit dem Streichhandschuh hatten bei der Formulierung 5A 17,5 % und bei der Formulierung 5B 20% der Setzlinge braune Verfärbungen an Terminaltrieb und -knospe. Bei der alternativen Applikation von Formulierung 5A und 5B wobei die Formulierungen mittels Kartusche über eine Dosierspitze appliziert wurde, wurde keine einzige Verfärbung gefunden.

**Tabelle 5**

| Rohstoff | Formulierung/ Konzentration in g | |
|---|---|---|
| | 5A | 5B |
| Vaseline, kosm. Qualität | 1000 | 940 |
| Lanolin | | 50 |
| Sorbitantrioleat | | 9 |

Ein besonders großer Unterschied in der Phytotoxizität wurde bei der Behandlung von "Red Cedar" (Thuja plicata) und "White Cedar" (Thuja occidentalis) festgestellt. Jeweils 25 Stück "Red Cedar" und "White Cedar" Setzlinge wurden mit der vaselinehaltigen Formulierungen 5A und 5B mit dem Streichhandschuh und der Zangenbürste bestrichen. Dabei kam es sowohl bei der Behandlung gegen Winterverbiss, wie auch der Behandlung gegen Sommerverbiss zu einem Totalausfall. Wurde hingegen die Formulierungen 5A und 5B mittels Kartusche über eine Dosierspitze vorsichtig auf den dünnen Stamm appliziert ohne die Nadeln, soweit applikationstechnisch möglich, stark zu beschmieren, wurden zwar bei 37% der Pflanzen leichte phytotoxische Erscheinungen festgestellt, es kam aber in keinem einzigen Fall zu Ausfall einer Pflanze.

### Beispiel 7

Mit den Formulierungen aus Tab. 6 wurden biologische Wirksamkeitsversuche gegen Verbiss von Terminalknospen und Terminaltrieben durch Rehe in Nadelgehölzen und Laubgehölzen durchgeführt. Die Versuche wurden in Übereinstimmung mit den Standards der EPPO sowie den Empfehlungen der Guten Experimentellen Praxis (GEP) durchgeführt.

Die in Tabelle 6 angeführten Versuchsergebnisse sind auf das Wesentliche reduzierte Zusammenfassungen

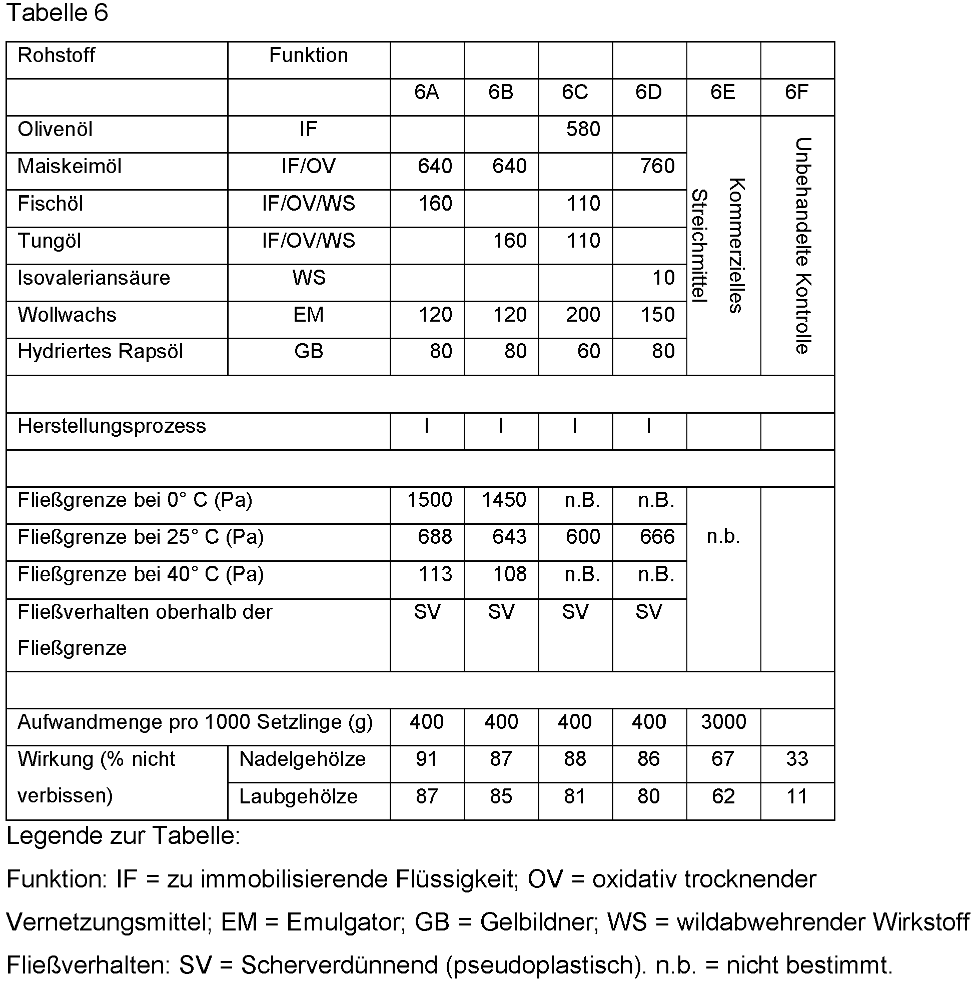

### Rheometrie:

Messgerät: MCR 102 (Anton Paar Germany GmbH)
Temperiereinrichtung: Peltier-Platte mit passiver Kupferhaube (P-PTD200/Air)
Messgeometrie: CP25-1 (Messkegel mit 25mm Durchmesser und 1° Winkel)

### Versuchsbeschreibung:

Die Proben wurde auf die untere Platte mittels Spatel aufgetragen und zunächst ein Spalt von 55µm angefahren. Dabei wird überschüssiges Material aus dem Messspalt gedrängt und mittels Spatel entfernt. Dann wurde der Messspalt von 49µm angefahren.

Bevor die Messung gestartet wurde, wurde gewartet bis die Normalkraft auf unter ca. 1N abgesunken ist.

Im Fall der Probe D sank die Normalkraft nach Erreichen des Messspaltes von 49 µm nicht unter ca. 6N.

Die Schubspannung wurde von 1 auf 1000 Pa (bzw. 10000 Pa für Formulierung D und A2) (1000 Messpunkte, 1 s Messpunktdauer) erhöht. Als Fließgrenze wird die Schubspannung angegeben, bei der die Probe anfängt zu fließen. Dies resultiert in einer von Null verschiedenen messbaren Scherrate. Es wird diejenige Schubspannung als Fließgrenze angegeben, bei der die Scherrate von 0,01 1/s überschritten wird. Anmerkung: Diese Definition der Fließgrenze kann vom Messgerät und dem Versuchsaufbau abhängig sein.

Wie aus Tab. 6 deutlich zu sehen ist, haben alle geprüften Formulierungen der erfindungsgemäßen Wildverbissmittel eine, gegenüber einem kommerziell erhältliche Standardprodukt, eine bessere Wirkung.

Die geprüften erfindungsgemäßen Wildverbissmittel und das Standardprodukt haben eine gegenüber der unbehandelten Kontrolle, signifikante Wirkung.

## Patentansprüche

1. **Verwendung** einer Formulierung als Mittel zur Tierabwehr, insbesondere als Wildverbissmittel, welche wenigstens eine immobilisierbare Flüssigkeit und einen bei Raumtemperatur festen Gelbildner umfasst, wobei die Formulierung ein plastisches nicht newtonsches Fluid ist, bei dem die zum Erreichen des Fließzustandes bzw. des Fließens notwendige Mindestschubspannung größer als 0 ist, wobei der Gelbildner ein niedermolekularer Gelbildner mit einem Molekulargewicht von unter 4000 g/Mol ist, **dadurch gekennzeichnet,**
- **dass** die Formulierung zusätzlich ein chemisches Vernetzungsmittel umfasst, oder dass die immobilisierbare Flüssigkeit ein chemisches Vernetzungsmittel ist, wobei
∘ das chemische Vernetzungsmittel ein Vernetzungsmittel ist, welches durch Kontakt mit Sauerstoff ein kovalent gebundenes Polymer bildet, und/oder
∘ das chemische Vernetzungsmittel ein Vernetzungsmittel ist, welches durch UV-Einstrahlung ein kovalent gebundenes Polymer bildet, und/oder
∘ das chemische Vernetzungsmittel ein Vernetzungsmittel ist, welches durch Kontakt mit Wasser und/oder Wasserdampf ein kovalent gebundenes Polymer bildet,
wobei das chemische Vernetzungsmittel ein trocknendes Öl ist,
- und **dass** die Formulierung ein Casson-Fluid ist.

2. Verwendung nach Anspruch 1, **dadurch gekennzeichnet, dass** die immobilisierbare Flüssigkeit eine organische, insbesondere eine nicht mit Wasser mischbare, Flüssigkeit ist.

3. Verwendung nach Anspruch 2, **dadurch gekennzeichnet, dass** die immobilisierbare Flüssigkeit ein Öl, insbesondere ein nichttrocknendes Öl, ist.

4. Verwendung nach einem der Ansprüche 1 bis 3, **dadurch gekennzeichnet, dass** der Gelbildner ausgewählt ist aus 12-Hydroxystearinsäure (HSA), (1,3:2,4)-Dibenzylidensorbitol (DBS), Sterolen, Lecithin, Mono-, Di- und Triglyceriden, Lecithin und seinen Gemischen mit Sorbitanestern, Fettsäuren, Fettalkoholen, Wachsen und Wachsestern, Polyethylenwachsen, Amidwachsen und Mischungen aus einem oder mehreren daraus.

5. Verwendung nach einem der Ansprüche 1 bis 4, **dadurch gekennzeichnet, dass** das trocknende Öl ausgewählt ist aus Leinöl, Fischöl, Holzöl (Tungöl), Maiskeimöl, Sojaöl oder einer beliebigen Mischung daraus.

6. Verwendung nach einem der Ansprüche 1 bis 5, **dadurch gekennzeichnet, dass** die Formulierung ein Trocknungsmittel umfasst, wobei das Trocknungsmittel vorzugsweise ein Fettsäuresalz von Co, Zr, und/oder Ca ist.

7. Verwendung nach einem der Ansprüche 1 bis 6, **dadurch gekennzeichnet, dass** die Formulierung einen Geruchsstoff umfasst, und/oder dass die immobilisierbare Flüssigkeit ein Geruchsstoff ist, und/oder dass das chemische Vernetzungsmittel ein Geruchsstoff ist.

8. Verwendung nach einem der Ansprüche 1 bis 6, **dadurch gekennzeichnet, dass** die Formulierung einen Geruchsstoff umfasst, wobei der Geruchsstoff ausgewählt ist aus Lavendinöl, Lavendelöl, Weinraukenöl, Baldrianwurzelöl, gemahlene Baldrianwurzel, Isovaleriansäure, Valeriansäure, Buttersäure, Propionsäure, Essigsäure, Ameisensäure, Lanolinfettsäuren, Fischölfettsäuren, Schaffett, 2-Undecanon, Fischöl, Tungöl oder beliebigen Mischungen daraus.

9. Verwendung nach einem der Ansprüche 1 bis 8, **dadurch gekennzeichnet, dass** die Formulierung zusätzlich feste Partikel enthält, wobei die Partikel vorzugsweise eine durchschnittliche Partikelgröße von 0,05 mm bis 5 mm aufweisen.

10. Verwendung nach einem der Ansprüche 1 bis 9, **dadurch gekennzeichnet, dass** die Formulierung zusätzlich einen Emulgator enthält, wobei der der Emulgator gegebenenfalls ausgewählt ist aus Wollwachs, Wollfettsäuren, Rizinusöl, hydriertem Rizinusöl, Stearylcetylalkohol, Lecithin, verschiedenen Polysorbaten oder beliebigen Mischungen daraus.

11. Verwendung nach einem der Ansprüche 1 bis 10, **dadurch gekennzeichnet, dass** die Formulierung einen anorganischen Füllstoff enthält, und/oder dass die Formulierung ein Pigment enthält.

12. Applikationsvorrichtung zum Lagern, Transportieren und Ausbringen der Formulierung, in der eine Formulierung nach einem der Ansprüche 1 bis 11 zur Verwendung nach einem der Ansprüche 1 bis 11 angeordnet ist, wobei die Applikationsvorrichtung ein Behältnis zur Aufnahme der Formulierung mit einer Auslassöffnung, sowie einen Pressmechanismus zur Druckbeaufschlagung des Behältnisses umfasst, wobei der Pressmechanismus gegebenenfalls derart ausgebildet ist, um eine Schubspannung zu erzeugen, die dazu geeignet ist, die Fließgrenze der Formulierung zu überwinden.

13. Applikationsvorrichtung nach Anspruch 12, **dadurch gekennzeichnet, dass** das Behältnis zur Aufnahme der Formulierung als vom Pressmechanismus trennbare Kartusche ausgebildet ist, oder dass das Behältnis zur Aufnahme der Formulierung einen integrierten Pressmechanismus umfasst.

14. **Verfahren** zur Bereitstellung eines Mittels zur Tierabwehr umfassend den Auftrag einer Formulierung zur Verwendung nach einem der Ansprüche 1 bis 11 auf eine Oberfläche, wobei die Formulierung gegebenenfalls in Form von länglichen zylinderförmigen Raupen aufgetragen wird.

## Claims

1. **Use** of a formulation as an animal repellent, in particular as a game browsing repellent, comprising at least one immobilisable liquid and a gelling agent which is solid at room temperature, wherein the formulation is a plastic, non-Newtonian fluid in which the minimum shear stress required to achieve the flowing state or flow is greater than 0, wherein the gelling agent is a low molecular weight gelling agent with a molecular weight of less than 4000 g/mol, **characterised**
- **in that** the formulation additionally comprises a chemical cross-linking agent, or that the immobilisable liquid is a chemical cross-linking agent, wherein
∘ the chemical cross-linking agent is a cross-linking agent which forms a covalently bound polymer upon contact with oxygen, and/or
∘ the chemical cross-linking agent is a cross-linking agent which forms a covalently bound polymer upon exposure to UV radiation, and/or
∘ the chemical cross-linking agent is a cross-linking agent which forms a covalently bound polymer upon contact with water and/or water vapour,
wherein the chemical cross-linking agent is a drying oil,
- and **in that** the formulation is a Casson fluid.

2. Use according to claim 1, **characterised in that** the immobilisable liquid is an organic liquid, in particular one that is immiscible with water.

3. Use according to claim 2, **characterised in that** the immobilisable liquid is an oil, in particular a non-drying oil.

4. Use according to any one of claims 1 to 3, **characterised in that** the gelling agent is selected from 12-hydroxystearic acid (HSA), (1,3:2,4)-dibenzylidene sorbitol (DBS), sterols, lecithin, mono-, di- and triglycerides, lecithin and mixtures thereof with sorbitan esters, fatty acids, fatty alcohols, waxes and wax esters, polyethylene waxes, amide waxes and mixtures of one or more thereof.

5. Use according to any one of claims 1 to 4, **characterised in that** the drying oil is selected from linseed oil, fish oil, wood oil (tung oil), maize germ oil, soya oil or any mixture thereof.

6. Use according to any one of claims 1 to 5, **characterised in that** the formulation comprises a drying agent, wherein the drying agent is preferably a fatty acid salt of Co, Zr and/or Ca.

7. Use according to any one of claims 1 to 6, **characterised in that** the formulation comprises an odorant, and/or that the immobilisable liquid is an odorant, and/or that the chemical cross-linking agent is an odorant.

8. Use according to any one of claims 1 to 6, **characterised in that** the formulation comprises a odorant, wherein the odorant is selected from lavandin oil, lavender oil, rue oil, valerian root oil, ground valerian root, isovaleric acid, valeric acid, butyric acid, propionic acid, acetic acid, formic acid, lanolin fatty acids, fish oil fatty acids, sheep fat, 2-undecanone, fish oil, tung oil or any mixtures thereof.

9. Use according to any one of claims 1 to 8, **characterised in that** the formulation additionally contains solid particles, which preferably have an average particle size of 0.05 mm to 5 mm.

10. Use according to any one of claims 1 to 9, **characterised in that** the formulation additionally contains an emulsifier, wherein the emulsifier is optionally selected from lanolin, lanolin fatty acids, castor oil, hydrogenated castor oil, stearylcetyl alcohol, lecithin, various polysorbates or any mixtures thereof.

11. Use according to any one of claims 1 to 10, **characterised in that** the formulation contains an inorganic filler, and/or that the formulation contains a pigment.

12. An application device for storing, transporting and dispensing the formulation, in which a formulation according to one of claims 1 to 11 for use according to one of claims 1 to 11 is arranged, wherein the application device comprises a container for holding the formulation, having an outlet opening, and a pressing mechanism for pressurising the container, wherein the pressing mechanism is optionally adapted to generate a shear stress suitable for overcoming the yield point of the formulation.

13. The application device according to claim 12, **characterised in that** the container for holding the formulation is configured as a cartridge that is separable from the pressing mechanism, or that the container for holding the formulation comprises an integrated pressing mechanism.

14. A **method** for providing an animal repellent comprising applying a formulation for use according to any one of claims 1 to 11 to a surface, wherein the formulation is optionally applied in the form of elongated cylindrical beads.

## Revendications

1. **Utilisation** d'une formulation comme agent répulsif pour animaux, en particulier comme produit anti-abroutissement, qui comprend au moins un liquide immobilisable et un agent gélifiant solide à température ambiante, la formulation étant un fluide plastique non newtonien pour lequel la contrainte de cisaillement minimale nécessaire pour atteindre l'écoulement ou l'état d'écoulement est supérieure à 0, l'agent gélifiant étant un agent gélifiant de faible poids moléculaire ayant un poids moléculaire inférieur à 4 000 g/mol, **caractérisée en ce**
- **que** la formulation comprend en outre un agent de réticulation chimique, ou que le liquide immobilisable est un agent de réticulation chimique, dans laquelle
∘ l'agent de réticulation chimique est un agent de réticulation qui forme un polymère à liaisons covalentes au contact de l'oxygène, et/ou
∘ l'agent de réticulation chimique est un agent de réticulation qui forme un polymère à liaisons covalentes sous l'effet d'un rayonnement UV, et/ou
∘ l'agent de réticulation chimique est un agent de réticulation qui, au contact de l'eau et/ou de la vapeur d'eau, forme un polymère à liaisons covalentes,
l'agent de réticulation chimique étant une huile siccative,
- et **que** la formulation est un fluide de Casson.

2. Utilisation selon la revendication 1, **caractérisée en ce que** le liquide immobilisable est un liquide organique, en particulier un liquide non miscible à l'eau.

3. Utilisation selon la revendication 2, **caractérisée en ce que** le liquide immobilisable est une huile, en particulier une huile non siccative.

4. Utilisation selon l'une des revendications 1 à 3, **caractérisée en ce que** l'agent gélifiant est choisi parmi l'acide 12-hydroxystéarique (HSA), le (1,3:2,4)-dibenzylidène-sorbitol (DBS), les stérols, la lécithine, les mono-, di- et triglycérides, la lécithine et ses mélanges avec des esters de sorbitane, des acides gras, des alcools gras, des cires et des esters de cire, des cires de polyéthylène, des cires d'amide et des mélanges d'un ou plusieurs de ces composants.

5. Utilisation selon l'une des revendications 1 à 4, **caractérisée en ce que** l'huile siccative est choisie parmi l'huile de lin, l'huile de poisson, l'huile de bois (huile de tung), l'huile de germes de maïs, l'huile de soja ou tout mélange de celles-ci.

6. Utilisation selon l'une des revendications 1 à 5, **caractérisée en ce que** la formulation comprend un agent dessiccatif, dans laquelle l'agent dessiccatif est de préférence un sel d'acide gras de Co, Zr et/ou Ca.

7. Utilisation selon l'une des revendications 1 à 6, **caractérisée en ce que** la formulation comprend un agent odorant, et/ou **en ce que** le liquide immobilisable est un agent odorant, et/ou **en ce que** l'agent de réticulation chimique est un agent odorant.

8. Utilisation selon l'une des revendications 1 à 6, **caractérisée en ce que** la formulation comprend un agent odorant, dans laquelle l'agent odorant est choisi parmi l'huile de lavandin, l'huile de lavande, l'huile de rue, l'huile de racine de valériane, la racine de valériane moulue, l'acide isovalérique, l'acide valérique, l'acide butyrique, l'acide propionique, l'acide acétique, l'acide formique, les acides gras de lanoline, les acides gras d'huile de poisson, la graisse de mouton, le 2-undécanone, l'huile de poisson, l'huile de tung ou tout mélange de ceux-ci.

9. Utilisation selon l'une des revendications 1 à 8, **caractérisée en ce que** la formulation contient en outre des particules solides, lesdites particules présentant de préférence une taille moyenne comprise entre 0,05 mm et 5 mm.

10. Utilisation selon l'une des revendications 1 à 9, **caractérisée en ce que** la formulation contient en outre un émulsifiant, dans laquelle l'émulsifiant est optionnellement choisi parmi la lanoline, les acides gras de la laine, l'huile de ricin, l'huile de ricin hydrogénée, l'alcool stéaryle-cétylique, la lécithine, divers polysorbates ou tout mélange de ceux-ci.

11. Utilisation selon l'une des revendications 1 à 10, **caractérisée en ce que** la formulation contient une charge inorganique et/ou **en ce que** la formulation contient un pigment.

12. Dispositif d'application destiné au stockage, au transport et à l'application de la formulation, dans lequel une formulation selon l'une des revendications 1 à 11 est disposée en vue d'une utilisation selon l'une des revendications 1 à 11, le dispositif d'application comprenant un récipient destiné à recevoir la formulation et muni d'un orifice de sortie, ainsi qu'un mécanisme de pression destiné à mettre le récipient sous pression, le mécanisme de pression étant optionnellement conçu de manière à générer une contrainte de cisaillement apte à surmonter la limite d'écoulement de la formulation.

13. Dispositif d'application selon la revendication 12, **caractérisé en ce que** le récipient destiné à contenir la formulation est conçu sous la forme d'une cartouche détachable du mécanisme de pression, ou **en ce que** le récipient destiné à contenir la formulation comprend un mécanisme de pression intégré.

14. **Procédé** de mise à disposition d'un agent répulsif pour animaux, comprenant l'application d'une formulation destinée à être utilisée selon l'une des revendications 1 à 11 sur une surface, la formulation étant optionnellement appliquée sous la forme de boudins cylindriques allongés.
